# DEMANDE DE BREVET EUROPEEN

(11) **EP 1 177 923 A2**
(43) Date de publication de la demande: **06.02.2002**
(21) Numéro de dépôt: 01118504.8
(22) Date de dépôt: 01.08.2001
(51) Int. Cl.: B60H 1/00

(54) **Mécanisme de réglage**

(30) Priorité: 02.08.2000 DE 10037733
(71) Demandeur: Valeo Klimasysteme GmbH, 96476 Rodach (DE)
(72) Inventeur: Hentschel, Joachim, 96479 Weitramsdorf (DE)
(74) Mandataire: Gérard, Michel

(57) **Abrégé**

Mécanisme de réglage, notamment pour un clapet à air dans un équipement de chauffage, de ventilation et/ou de climatisation d'un véhicule, comprenant un élément de transmission longitudinal de la force et/ou du mouvement (10), lequel couple un élément de manoeuvre avec un élément à manoeuvrer (20), l'élément de transmission (10) étant en contact par fermeture géométrique avec au moins l'un des éléments de manoeuvre et à manoeuvrer (20).

## Description

La présente invention concerne de manière générale un mécanisme de réglage et plus particulièrement un mécanisme de réglage pour un clapet à air dans un équipement de chauffage, de ventilation et/ou de climatisation d'un véhicule.

Les mécanismes de réglage classiques de ce type comportent un élément de manoeuvre comme, par exemple, un bouton rotatif ou un curseur qui est généralement disposé sur le tableau de bord du véhicule. Une action de l'élément de manoeuvre doit donner lieu à un réglage correspondant du clapet de mélange d'air, par exemple, ou aussi d'autres clapets de commande d'air d'un équipement de chauffage, de ventilation et/ou de climatisation. Pour ce faire, l'élément de manoeuvre est relié à demeure avec le clapet à air ou avec un élément intermédiaire par le biais d'un câble de commande, par exemple, le clapet à air ou l'élément intermédiaire étant ainsi considéré comme l'élément à manoeuvrer.

En variante des câbles de commande décrits ci-dessus, on utilise également dans certains cas des arrangements de roues dentées ou d'engrenages pour transmettre la force et/ou le mouvement de l'élément de manoeuvre à l'élément à manoeuvrer. Les câbles de commande ainsi que les arrangements de roues dentées sont cependant complexes à monter et à régler, les arrangements de roues dentées ayant pour inconvénient supplémentaire qu'ils nécessitent un espace de montage relativement important et que les possibilités en matière de souplesse d'utilisation sont limitées.

Il existe ainsi un besoin général pour un mécanisme de réglage amélioré. Un mécanisme de réglage possédant les caractéristiques du préambule de la revendication 1 est connu du brevet EP 0 812 713 A2. Ce mécanisme de réglage, qui sert essentiellement à régler un clapet d'air dans un climatiseur, comprend un élément longitudinal de transmission de force et/ou de mouvement réalisé sous la forme d'un câble sans fin qui couple l'élément de manoeuvre avec l'élément à manoeuvrer en utilisant deux poulies, les poulies étant chacune couplées avec des mécanismes à roues dentées ou à engrenages. Un inconvénient notable de ce mécanisme de réglage connu réside dans le fait que les poulies doivent appliquer au câble une tension parfaitement définie afin de réduire le risque de déréglage grâce à l'effet de friction, ce risque ne pouvant pas être complètement exclu.

L'objet de la présente invention est donc de perfectionner un tel mécanisme de réglage générique tel qu'il est connu du brevet EP 0 812 713 A2 de manière à limiter tout risque de déréglage pendant le fonctionnement et plus particulièrement à le rendre impossible, et ce en réduisant également les contraintes en matière de tolérances de montage.

Conformément à l'invention, cet objet est réalisé par les caractéristiques de la partie caractérisante de la revendication 1. Des formes de réalisation préférentielles sont mentionnées dans les revendications secondaires.

L'invention propose notamment l'existence d'un contact à fermeture géométrique entre l'élément de transmission et au moins l'un des éléments de manoeuvre et l'élément à manoeuvrer sur un mécanisme de réglage, par exemple pour un clapet à air dans un équipement de chauffage, de ventilation et/ou de climatisation pour un véhicule, composé d'un élément longitudinal de transmission de la force et/ou du mouvement, lequel couple un élément de manoeuvre avec un élément à manoeuvrer. Le fait de prévoir une fermeture géométrique entre l'élément de transmission longitudinal et l'élément de manoeuvre et/ou l'élément à manoeuvrer améliore le contact réciproque, ce qui évite notamment un mouvement relatif et ainsi un déréglage, mais qui est cependant limité si, au lieu de la fermeture par friction telle qu'elle est décrite avec l'état de la technique, on prévoit une fermeture géométrique sans complémentarité des formes.

Pour restreindre encore davantage un éventuel mouvement relatif, il est avantageusement prévu que l'élément de transmission soit en contact à la fois avec l'élément de manoeuvre et l'élément à manoeuvrer par fermeture géométrique. Bien que des moyens de fermeture géométrique différents puissent à chaque fois être prévus du côté de l'élément de manoeuvre et du côté de l'élément à manoeuvrer, il est avantageusement prévu d'utiliser des moyens correspondants.

La fermeture géométrique existe avantageusement dans toutes les positions du mécanisme de réglage, ce qui permet de conserver un contact pratiquement sans jeu sur toute la plage de mouvement sans qu'il ne puisse se produire un déréglage par patinage.

Pour réaliser la fermeture géométrique, l'élément de transmission dispose de préférence d'épaississements, notamment des éléments en plastique en forme de billes ou de barillets. L'élément de transmission pourrait ainsi être une corde, par exemple, sur laquelle sont surmoulés à intervalles réguliers des éléments sphériques en plastique. En variante, il est également envisageable de réaliser l'élément de transmission sous la forme d'une courroie crantée.

En variante des épaississements prévus sur l'élément de transmission, il est également possible de réaliser la fermeture géométrique par des rétrécissements sur l'élément de transmission, notamment en utilisant des évidements dans le matériau. Avec cette variante de forme de réalisation, l'élément de transmission pourrait être une bande munie d'orifices de traversée ou encore un produit similaire à une chaîne.

L'élément de manoeuvre et/ou l'élément à manoeuvrer présentent avantageusement des évidements ou des parties en saillie qui correspondent pour l'essentiel aux épaississements ou aux rétrécissements de l'élément de transmission. Dans une forme de réalisation particulièrement préférée, la complémentarité de forme entre les épaississements ou les rétrécissements de l'élément de transmission et les évidements ou les parties en saillie de l'élément de manoeuvre et/ou de l'élément à manoeuvrer est réalisée de manière à obtenir un centrage automatique de l'élément de transmission. On peut mentionner un exemple d'élément de transmission qui ressemble à un collier de perles alors que des évidements qui se rétrécissent pour former un logement de forme demi-sphérique sont prévus sur l'élément de manoeuvre et/ou l'élément à manoeuvrer.

Il est en outre prévu de préférence que l'écart entre deux épaississements/rétrécissements successifs de l'élément de transmission correspond pour l'essentiel à un multiple entier, plus particulièrement au double de l'écart entre deux évidements/parties en saillie successives de l'élément de manoeuvre et/ou de l'élément à manoeuvrer. Cette configuration permet d'une part de réaliser différents rapports de démultiplication pendant que d'autre part l'écart plus important au niveau de l'élément de transmission permet d'obtenir des rayons de courbure plus petits, car les épaississements individuels, par exemple, de l'élément de transmission n'entrent pas en contact les uns avec les autres.

L'élément de transmission est avantageusement déformable, notamment pliable, en prévoyant notamment de préférence qu'une extension dans le sens longitudinal soit impossible. La déformabilité de l'élément de transmission améliore les possibilités d'utilisation, ce qui facilite également l'installation si l'espace de montage disponible est limité, par exemple dans le cas d'une application sur un véhicule.

L'élément de transmission est avantageusement réalisé sous la forme d'une bande sans fin sur laquelle les extrémités sont par exemple collées, soudées ou reliées ensemble d'une autre manière. L'utilisation d'une bande sans fin permet un réglage précis indépendamment de la direction dans laquelle est manoeuvré l'élément de manoeuvre.

L'élément de transmission peut se boucler au moins partiellement autour de l'élément de manoeuvre et/ou de l'élément à manoeuvrer, un bouclage multiple étant ici également possible.

Lorsque l'élément de transmission se boucle au moins partiellement autour de l'élément de manoeuvre et/ou de l'élément à manoeuvrer, il est avantageux de prévoir un écart entre deux épaississements/ rétrécissements successifs de l'élément de transmission inférieur à la longueur de la courbure de la boucle, en prévoyant notamment de préférence que ledit écart soit inférieur à la moitié de la longueur de la courbure de la boucle de manière à ce que la fermeture géométrique conforme à l'invention puisse avoir lieu quelle que soit la position du mécanisme de réglage en au moins deux points aussi bien par rapport à l'élément à manoeuvrer que par rapport à l'élément de manoeuvre.

Il est finalement prévu de manière préférentielle que l'élément de transmission passe au moins partiellement dans un dispositif de guidage entre l'élément de manoeuvre et l'élément à manoeuvrer. Le faut de prévoir un dispositif de guidage permet d'éviter une interaction entre les épaississements et les rétrécissements de l'élément de transmission avec d'autres pièces éventuellement présentes. À titre d'exemple, le dispositif de guidage peut comprendre deux tubes creux reliés entre eux, la longueur des tubes creux devant ici également être supérieure à l'écart entre deux épaississements/rétrécissements successifs de l'élément de transmission. Il convient de mentionner que le dispositif de guidage peut également présenter en tout un boîtier pour l'élément de manoeuvre et/ou l'élément à manoeuvrer ou deux boîtiers séparés à cet effet.

D'autres avantages et caractéristiques de l'invention résultent du descriptif suivant, ayant uniquement une valeur d'exemple, d'une forme de réalisation actuellement préférée qui se réfère aux dessins joints. Ceux-ci illustrent :
- Figure 1: la représentation en perspective d'une partie d'une forme de réalisation préférentielle d'un mécanisme de réglage conforme à l'invention ;
- Figure 2: la partie illustrée dans la figure 1 du mécanisme de réglage dans une portion de boîtier.

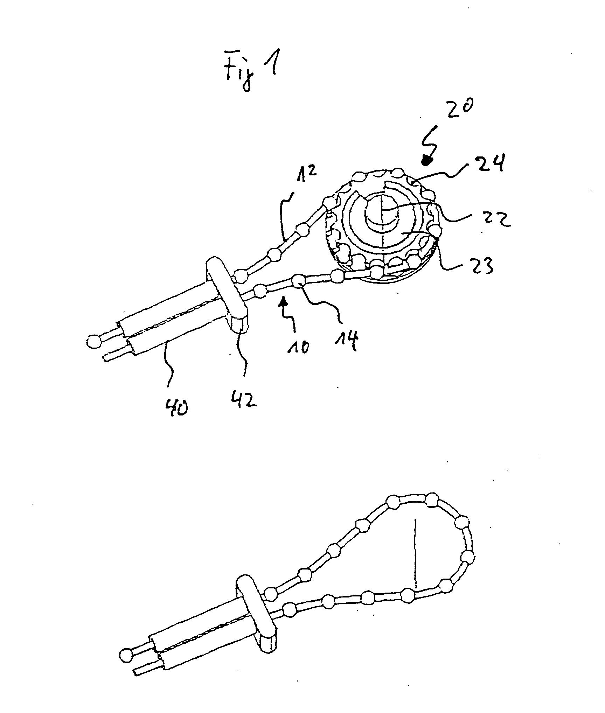

Dans la figure 1, l'élément à manoeuvrer 20 illustré est une roue 23 qui peut tourner autour d'un axe 22. Un clapet à air, par exemple, peut être attaché à l'arbre 22, lequel peut alors être pivoté en fonction d'une rotation de l'axe 22. Bien que ceux-ci ne soient pas illustrés, il est également possible d'intercaler différents mécanismes à roues dentées ou à engrenages comme cela est décrit, par exemple, dans le brevet EP 0 812 713 A2.

Une bande 12 est disposée autour de l'élément à manoeuvrer 20, laquelle fait tourner la roue 23 de plus de 180°. La bande 12 fait partie d'un élément de transmission de force et/ou de mouvement 10 qui contourne de la même manière un élément de manoeuvre non illustré qui se trouve à l'autre extrémité. Pour obtenir la fermeture géométrique conforme à l'invention, l'élément de transmission 10 dans la forme de réalisation illustrée dispose de pièces en saillie de forme sphérique 14 qui sont prévues à intervalles réguliers sur la corde ou le câble 12, par exemple surmoulées par moulage par injection de plastique.

L'élément à manoeuvrer 20 présente sur sa périphérie des évidements 24 dont la forme est adaptée aux pièces en saillie 14 de l'élément de transmission. Dans le présent cas, les évidements 24 forment des évidements demi-sphériques qui sont prévus à intervalles réguliers sur la roue 23. Comme illustré, il existe entre l'espacement des épaississements 14 voisins de l'élément de transmission 10 et les évidements 24 de l'élément à manoeuvrer 20 une relation telle que tous les épaississements 14 qui reposent sur la roue 23 pénètrent dans un évidement 24 correspondant. Dans l'exemple représenté, la relation mentionnée correspond à un rapport de 2:1, ce qui a pour conséquence qu'entre deux évidements 24 qui reçoivent un épaississement 14 se trouve un évidement 24 dans lequel ne se trouve aucun épaississement 14.

Comme le permet de le constater nettement le dessin représenté, au moins deux épaississements 14 se trouvent dans des évidements 24 quelle que soit la position, ce qui permet de garantir une transmission continue et sans jeu de la force et/ou du mouvement.

La figure 1 illustre en plus un dispositif de guidage 40, 42 qui comprend deux tubes creux 40 et une bride de terminaison 42. La bride de terminaison 42, bien que cela ne soit pas illustré, dispose d'une zone de débouché biseautée qui permet à la corde 12 munie des épaississements 14 de pénétrer sans résistance dans les tubes creux 40.

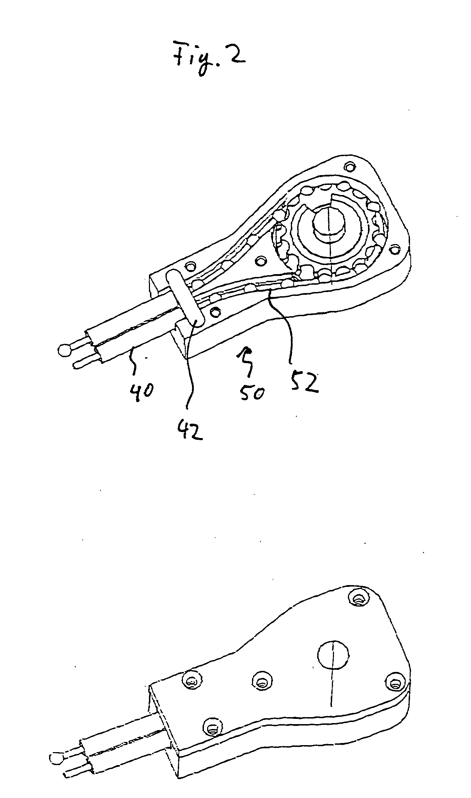

La figure 2 illustre la partie du mécanisme de réglage conforme à l'invention illustrée dans la figure 1 logée dans un boîtier 50. Le boîtier 50 comprend des rainures de guidage 52 pour l'élément de transmission 10 ainsi qu'un évidement dont la forme est pour l'essentiel adaptée à la forme de l'élément à manoeuvrer 20 et qui empêche que les épaississements 14 de l'élément de transmission 10 sortent des évidements 24 de l'élément à manoeuvrer 20.

Comme permet nettement de le constater cette représentation, le mécanisme de réglage conforme à l'invention présente un avantage supplémentaire en ce que les forces de frottement produites sont réduites, car l'appui entre l'élément de transmission 10 et les éléments de guidage quelconques ne se produit qu'au niveau des sommets des épaississements 14, ce qui permet de manoeuvrer le mécanisme de réglage de manière globalement simple et avec peu d'effort.

Bien que la présente invention ait ici été représentée dans son intégralité, l'homme de l'art pourra constater que différentes modifications sont possibles dans le cadre de la protection demandée. Il convient ainsi de mentionner que l'élément de transmission, au lieu d'une bande sans fin de type collier de perles, peut également être de type chaîne, une courroie crantée ou similaire, l'élément à manoeuvrer et l'élément de manoeuvre devant alors bien évidemment être adaptés en conséquence.

## Revendications

1. Mécanisme de réglage, notamment pour un clapet à air dans un équipement de chauffage, de ventilation et/ou de climatisation d'un véhicule, comprenant un élément de transmission longitudinal de la force et/ou du mouvement (10), lequel couple un élément de manoeuvre avec un élément à manoeuvrer (20), **caractérisé en ce que** l'élément de transmission (10) est en contact par fermeture géométrique avec au moins l'un des éléments de manoeuvre et à manoeuvrer (20).

2. Mécanisme de réglage selon la revendication 1, **caractérisé en ce que** l'élément de transmission (10) est en contact par fermeture géométrique avec l'élément de manoeuvre et l'élément à manoeuvrer (20).

3. Mécanisme de réglage selon la revendication 1 ou 2, **caractérisé en ce que** la fermeture géométrique est établie dans toutes les positions du mécanisme de réglage.

4. Mécanisme de réglage selon l'une des revendications précédentes, **caractérisé en ce que** l'élément de transmission (10) présente des épaississements (14) pour la fermeture géométrique, notamment des éléments en plastique en forme de billes ou de barillets.

5. Mécanisme de réglage selon l'une des revendications 1 à 3, **caractérisé en ce que** l'élément de transmission (10) présente des rétrécissements pour la fermeture géométrique, notamment des évidements de matériau.

6. Mécanisme de réglage selon la revendication 4 ou 5, **caractérisé en ce que** l'élément de manoeuvre et/ou l'élément à manoeuvrer (20) présente des évidements (24) ou des parties en saillie qui correspondent pour l'essentiel aux épaississements (14) ou aux rétrécissements de l'élément de transmission (10).

7. Mécanisme de réglage selon la revendication 6, **caractérisé en ce que** l'écart entre deux épaississements/rétrécissements (14) successifs de l'élément de transmission (10) correspond pour l'essentiel à un multiple entier, plus particulièrement au double de l'écart entre deux évidements/parties en saillie (24) successives de l'élément de manoeuvre et/ou de l'élément à manoeuvrer (20).

8. Mécanisme de réglage selon l'une des revendications précédentes, **caractérisé en ce que** l'élément de transmission (10) est déformable, et plus particulièrement pliable.

9. Mécanisme de réglage selon l'une des revendications précédentes, **caractérisé en ce que** l'élément de transmission (10) est une bande sans fin.

10. Mécanisme de réglage selon l'une des revendications précédentes, **caractérisé en ce que** l'élément de transmission (10) se boucle au moins partiellement autour de l'élément de manoeuvre et/ou de l'élément à manoeuvrer (20).

11. Mécanisme de réglage selon l'une des revendications 4 à 10, **caractérisé en ce que** l'écart entre deux épaississements/rétrécissements (14) successifs de l'élément de transmission (10) est inférieur à la plus petite longueur de la courbure de la boucle.

12. Mécanisme de réglage selon l'une des revendications précédentes, **caractérisé en ce que** l'élément de transmission (10) passe au moins en partie dans un dispositif de guidage (40, 42, 50) entre l'élément de manoeuvre et l'élément à manoeuvrer (20).
